# EUROPÄISCHE PATENTSCHRIFT

(11) **EP 1 310 421 B1**
(45) Veröffentlichungstag und Bekanntmachung des Hinweises auf die Patenterteilung: **02.03.2005**
(21) Anmeldenummer: 02022419.2
(22) Anmeldetag: 04.10.2002
(51) Int. Cl.: B62D 35/00

(54) **Luftleitvorrichtung für ein Kraftfahrzeug**
Aerodynamic spoiler for a vehicle
Véhicule automobile avec déflecteur aérodynamique

(30) Priorität: 10.11.2001 DE 10155376
(43) Veröffentlichungstag der Anmeldung: 14.05.2003
(73) Patentinhaber: Dr.Ing. h.c.F. Porsche Aktiengesellschaft, 70435 Stuttgart (DE)
(72) Erfinder: Adams, Stefan, 71229 Leonberg (DE)

(56) Entgegenhaltungen:
- EP-A- 0 454 945
- DE-A- 3 711 386
- US-A- 5 061 007
- US-A- 6 139 090

## Beschreibung

Bei der Erfindung wird ausgegangen von einer Luftleitvorrichtung für ein Kraftfahrzeug, gemäß Oberbegriff des Anspruchs 1.

Eine derartige Luftleitvorrichtung für ein Kraftfahrzeug ist aus der DE 37 11 386 A1 bekannt. Sie umfasst eine Ausstelleinrichtung und ein mittels der Ausstelleinrichtung in eine Wirk- und Ruhestellung verlagerbares Luftleitelement, insbesondere einen Heckspoiler. Das Luftleitelement ist in seiner Ruhestellung bezüglich einer feststehenden Karosserieaußenhaut versenkbar und in Wirkstellung über diese Karosserieaußenhaut hervorstehend ausstellbar. Die Ausstelleinrichtung besitzt wenigstens einen Aussteller mit einem in einem Führungsgehäuse verschiebbar gelagerten Ausstellarm, an dessen Befestigungsende das Luftleitelement angeordnet ist. Ferner ist der Aussteller mit einer manuell betätigbaren Einstelleinrichtung ausgestattet, mit der das Luftleitelement in seiner Ruhestellung relativ zu der Karosserieaußenhaut ausrichtbar ist. Für diese Ausrichtung ist in den als Hohlkörper vorliegenden Ausstellarm ein Rohrfortsatz eingesetzt, der innerhalb des Ausstellarms in verschiedenen Verschiebepositionen festgelegt werden kann. Für dieses Festlegen ist an dem Rohrfortsatz ein Langloch vorgesehen, durch welches eine Befestigungsschraube hindurchgreift, die in den Ausstellarm eingeschraubt ist. An dem freien Ende des Rohrfortsatzes wird das Luftleitelement befestigt.

Aufgabe der Erfindung ist es, eine Luftleitvorrichtung für ein Kraftfahrzeug anzugeben, die eine einfache Ausrichtung des Luftleitelements bezüglich der Karoserieaußenhaut ermöglicht.

Gelöst wird diese Aufgabe mit einer Luftleitvorrichtung für ein Kraftfahrzeug, welche die in Anspruch 1 genannten Merkmale umfasst. Weitere, die Erfindung ausgestaltende Merkmale sind in den Unteransprüchen angegeben.

Die mit der erfindungsgemäßen Luftleitvorrichtung hauptsächlich erzielten Vorteile sind darin zu sehen, dass eine sehr genaue und stufenlose Ausrichtung des Luftleitelements in seiner Ruhestellung relativ zu der Karosserieaußenhaut gegeben ist. Insbesondere ist an der erfindungsgemäßen Luftleitvorrichtung die Höhe (Z - Richtung) des Luftleitelements bezüglich der Karosserieaußenhaut einstellbar.

Nach einer Weiterbildung mit den in Anspruch 2 genannten Merkmalen ist vorteilhaft, dass das Luftleitelement beim Einstellen des Justiermittels nicht abmontiert werden muss.

Bei einem Ausführungsbeispiel mit den in Anspruch 3 genannten Merkmalen ergibt sich eine einfache Befestigungsmöglichkeit des Luftleitelements am Justiermittel.

Ist - wie in Anspruch 4 vorgesehen - der Befestigungsdurchbruch als Langloch ausgebildet, lässt sich zu der vorstehend erwähnten Ausrichtmöglichkeit in Z - Richtung noch eine weitere Ausrichtung erzielen, die entweder in X - Richtung- oder Y - Richtung orientiert ist, je nach dem, in welche Richtung sich das Langloch erstreckt. Dadurch kann ein Spalt zwischen dem Luftleitelement und der Karosserieaußenhaut auf ein gewünschtes Maß eingestellt werden.

Nach einer in Anspruch 5 angegebenen Alternative kann der Befestigungsdurchbruch einen größeren Innendurchmesser aufweisen als der Außendurchmesser des Befestigungsabschnittes, wodurch eine Ausrichtung sowohl in Z - als auch in Y - Richtung gegeben ist.

Gemäß Anspruch 6 kann das Luftleitelement zweiteilig aus einem Grundteil und einem das Grundteil verschließenden Deckel hergestellt sein, wodurch bei abgenommenem Deckel ein Zugang zum Justiermittel geschaffen ist.

Bei einem Ausführungsbeispiel der Luftleitvorrichtung mit den in Anspruch 7 genannten Merkmalen ist vorteilhaft, dass das Justiermittel über das Angriffsformelement einfach betätigt und außerdem genau eingestellt werden kann, um die gewünschte Relativstellung des Luftleitelements zu der Karosserieaußenhaut zu erhalten.

Die Erfindung wird nachfolgend anhand von Ausführungsbeispielen mit Bezug auf die Zeichnung näher erläutert.

Es zeigen:
- Fig. 1: eine teilweise dargestellte Heckpartie eines Kraftfahrzeugs mit in Ruhestellung vorliegendem Luftleitelement,
- Fig.2: die Heckpartie des Kraftfahrzeugs mit in Wirkstellung ausgefahrenem Luftleitelement,
- Fig. 3: eine Ausstelleinrichtung für das Luftleitelement,
- Fig. 4: die Ausstelleinrichtung mit daran angeordnetem Luftleitelement und
- Fig. 5: eine Schnittdarstellung entlang der Linie V - V durch einen Aussteller der Ausstelleinrichtung.

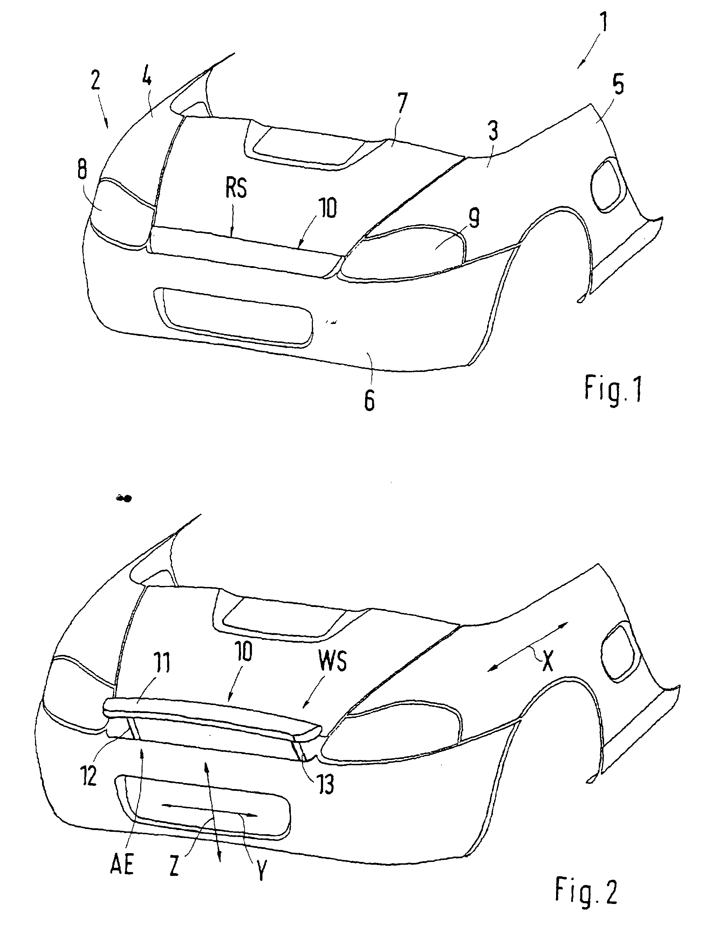

Die Fig. 1 zeigt ausschnittweise ein Kraftfahrzeug 1, von dem hier die Heckpartie 2 wiedergegeben ist, deren Karosserieaußenhaut 3 hintere Kotflügel 4 und 5, ein Heckende 6 sowie eine Zugangsklappe 7 für einen darunter liegenden Aufnahmeraum umfasst. Außerdem können in der Heckpartie beispielsweise bündig mit der Außenhaut 3 abschließende Heckleuchten 8 und 9 eingesetzt sein.

Das Kraftfahrzeug 1 weist wenigstens eine Luftleitvorrichtung 10 auf, die beim vorliegenden Ausführungsbeispiel des Kraftfahrzeugs 1 der Heckpartie 2 zugeordnet ist und einen ausfahrbaren Heckspoiler darstellt, der auch als Abrisskante bezeichnet werden kann. In Fig. 1 ist die Luftleitvorrichtung in einer Ruhestellung RS zu sehen, in der sie bezüglich der feststehenden Karosserieaußenhaut 3 zumindest teilweise versenkt ist.

Gemäß Fig. 2 ist die Luftleitvorrichtung in ihre Wirkstellung WS ausgefahren, was durch eine Verlagerung in Z - Richtung eines Luftleitelements 11 der Luftleiteinrichtung 10 erreicht wird. Die Z - Richtung verläuft im Wesentlichen parallel zu einer Fahrzeughochachse. Das Luftleitelement 11 ist streifenförmig und mit entsprechendem aerodynamischen Querschnitt ausgebildet und erstreckt sich im Wesentlichen parallel zur Y - Richtung, die parallel zur Fahrzeugquerachse angenommen ist. In X - Richtung, die etwa parallel zur Fahrzeuglängsachse ausgerichtet ist, ist die Erstreckung des streifenförmigen Luftleitelements 11 wesentlich geringer als in Y - Richtung.

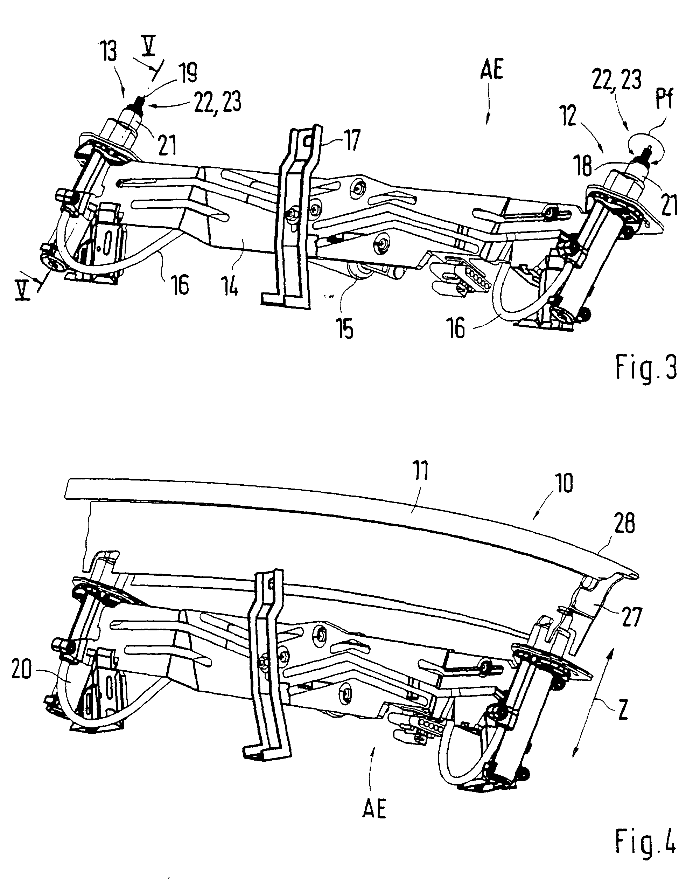

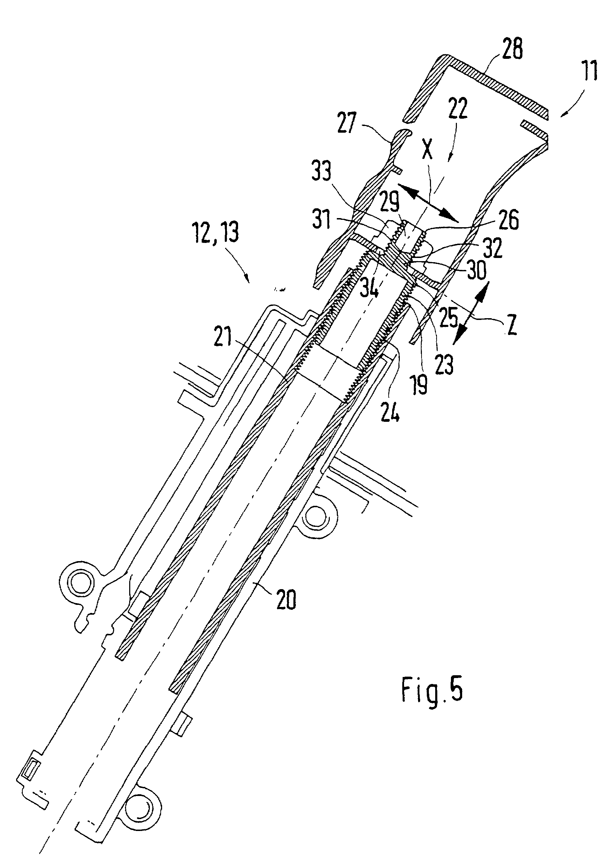

Für die beispielsweise geschwindigkeitsabhängige Verlagerung der Abrisskante 10 aus der Ruhestellung RS in die Wirkstellung WS und umgekehrt ist eine Ausstelleinrichtung AE vorgesehen, von der in Fig. 2 lediglich zwei in Y - Richtung beabstandet zueinander liegendende Aussteller 12 und 13 zu sehen sind. Gemäß Fig. 3 sind die beiden Aussteller 12 und 13 an einem Geräteträger 14 montiert, der außerdem eine Antriebseinrichtung 15 für die Aussteller 12 und 13 trägt. Die Antriebseinrichtung 15 ist beispielsweise als Elektromotor ausgebildet, der die Aussteller 12 und 13 über Zug- bzw. Druckkabel antreibt, die in Kabelkanälen 16 verlegt sind. Für eine Befestigung des Geräteträgers 14 an dem Aufbau des Kraftfahrzeugs 1 kann ferner ein Befestigungsträger 17 vorgesehen sein. Jeder Aussteller 12 und 13 besitzt ein Befestigungsende 18 bzw. 19, an denen das Luftleitelement 11 angebunden ist. Für die Verlagerung des Luftleitelements 11 in Z - Richtung sind die Aussteller 12 und 13 teleskopartig längenveränderbar. Hierfür weist jeder Aussteller einen aus einem Führungsgehäuse 20 axial ausfahrbar geführten Ausstellarm 21 auf, wie dies in Schnittdarstellung in Fig. 5 zu sehen ist.

Um in Ruhestellung RS das Luftleitelement 11 bezüglich der Karosserieaußenhaut 3 auszurichten zu können, so dass das Luftleitelement beispielsweise flächenbündig mit der Zugangsklappe 7 und dem Heckende 6 abschließt, weist jeder Aussteller 12, 13 eine manuell betätigbare Einstelleinrichtung 22 auf, die ein Justiermittel 23 besitzt, über das das Luftleitelement 11 mit dem Befestigungsende 19 verbunden ist. Jede Einstelleinrichtung 22 umfasst einen am Ausstellarm 21 ausgebildeten Innengewindeabschnitt 24, welcher mit einem Gegengewindeabschnitt 25 am Justiermittel 23 zusammenwirkt. Der Gegengewindeabschnitt 25 ist im gezeigten Ausführungsbeispiel als Außengewinde realisiert. Denkbar ist es allerdings auch, an Stelle des Innengewindeabschnitts 24 ein Außengewindeabschnitt anzubringen und den Gegengewindeabschnitt 25 als Innengewindeabschnitt auszuführen. Unabhängig von diesen Ausführungsvarianten ist am freien Ende 26 des Justiermittels 23 das Luftleitelement 11 befestigt. Durch Drehen des Justiermittels 23 in Drehrichtung Pf wird somit der axiale Abstand zwischen dem Befestigungsende 18 bzw. 19 und dem freien Ende 26 am Justiermittel 23 verändert.

Das Luftleitelement 11 ist zweiteilig ausgebildet und umfasst einen, beispielsweise hohlen, Grundteil 27 sowie einen den Grundteil verschließenden Deckel 28. Bei abgenommenem Deckel 28 ist das Justiermittel 23 von oben her zugänglich, so dass ein nicht dargestelltes Einstellwerkzeug an ein Angriffsformelement 29 des Justiermittels 23 angesetzt werden kann. An Stelle des abnehmbaren Deckels 28 könnten auch in dem Deckel 28 abdeckbare Durchbrüche über dem jeweiligen Justiermittel 23 vorgesehen sein.

Das Justiermittel 23 ist als gestufter Bolzen 30 ausgeführt, wobei der Gegengewindeabschnitt 25 an dem durchmessergrößeren Abschnitt des Bolzens ausgebildet ist. Auf der Übergangsstufe 31 des Bolzens 30 liegt das Luftleitelement 11 mit seinem Grundteil 27 auf und wird von dem durchmesserkleineren Abschnitt des Justiermittels 23 durchgriffen, welcher Abschnitt somit einen Befestigungsabschnitt 32 bildet, an dem ein Sicherungsmittel 33 angebracht ist, mit dem das Luftleitelement 11 sicher gehalten wird. Der Befestigungsabschnitt 32 kann ein Gewinde umfassen, auf das das Sicherungsmittel 33 aufgeschraubt ist. Ferner durchgreift der Befestigungsabschnitt 32 einen an dem Luftleitelement 11 vorgesehenen Befestigungsdurchbruch 34, der als Langloch ausgebildet sein kann und sich in X - oder Y - Richtung erstreckt. Alternativ ist es auch möglich, den Befestigungsdurchbruch 34 mit einem Innendurchmesser auszustatten, der größer als der Außendurchmesser des Befestigungsabschnitts 32 ist, wodurch eine Ausrichtung des Luftleitelements 11 in X - und Y - Richtung gegeben ist. Da das Justiermittel 23 relativ zum Luftleitelement 11 drehbar ist, wenn das Sicherungsmittel 33 gelöst ist, und außerdem der Deckel 28 abgenommen werden kann, ist für eine Ausrichtung in Z - Richtung kein Abmontieren des kompletten Luftleitelements 11 erforderlich. Bei gelöstem Sicherungsmittel 32 ist außerdem - je nach Ausbildung des Befestigungsdurchbruchs 34 - eine Einstellung in X- und/oder Y - Richtung möglich.

## Patentansprüche

1. Luftleitvorrichtung für ein Kraftfahrzeug, mit einer Ausstelleinrichtung und einem mittels der Ausstelleinrichtung in eine Wirk- und Ruhestellung verlagerbaren Luftleitelement (11), welches in seiner Ruhestellung (RS) bezüglich einer feststehenden Karosserieaußenhaut (3) versenkbar und in Wirkstellung (WS) über diese Karosserieaußenhaut (3) hervorstehend ausstellbar ist, welche Ausstelleinrichtung wenigstens einen Aussteller (12, 13) mit einem in einem Führungsgehäuse (20) verschiebbar gelagerten Ausstellarm (21) besitzt, an dessen Befestigungsende (18, 19) das Luftleitelement (11) angeordnet ist, und welcher Aussteller (12, 13) mit einer manuell betätigbaren Einstelleinrichtung (22) ausgestattet ist, um das Luftleitelement (11) in seiner Ruhestellung (RS) relativ zu der Karosserieaußenhaut (3) auszurichten, **dadurch gekennzeichnet, dass** der Aussteller (12, 13) an seinem Befestigungsende (18, 19) als Einstelleinrichtung (22) einen sich in Längsrichtung des Ausstellers (12, 13) erstreckenden Innen- oder Außengewindeabschnitt (24) besitzt, an dem ein einen Gegengewindeabschnitt (25) aufweisendes Justiermittel (23) der Einstelleinrichtung (22) aufgeschraubt ist, und dass an dem freien Ende (26) des Justiermittels (23) das Luftleitelement (11) befestigt ist.

2. Luftleitvorrichtung nach Anspruch 1, **dadurch gekennzeichnet, dass** das Justiermittel (23) relativ zum Luftleitelement (11) drehbar ist und an seinem freien Ende (26) einen Befestigungsabschnitt (31) besitzt, der in das Luftleitelement (11) eingreift.

3. Luftleitvorrichtung nach Anspruch 1 oder 2, **dadurch gekennzeichnet, dass** das Luftleitelement (11) einen Befestigungsdurchbruch (34) besitzt, der von dem Befestigungsabschnitt (32) durchgriffen ist, und dass das Luftleitelement (11) mit einem Sicherungsmittel (33) am Befestigungsabschnitt (32) gehalten ist.

4. Luftleitvorrichtung nach Anspruch 3, **dadurch gekennzeichnet, dass** der Befestigungsdurchbruch (34) als Langloch ausgebildet ist.

5. Luftleitvorrichtung nach Anspruch 3, **dadurch gekennzeichnet, dass** der Befestigungsdurchbruch (34) einen Innendurchmesser aufweist, der größer als der Außendurchmesser des Befestigungsabschnitts (32) ist.

6. Luftleitvorrichtung nach Anspruch 1, **dadurch gekennzeichnet, dass** das Luftleitelement (11) aus einem Grundteil (27) und einem den Grundteil (27) verschließenden Deckel (28) besteht und der Grundteil (27) an dem freien Ende (26) des Justiermittels (23) befestigt ist.

7. Luftleitvorrichtung nach Anspruch 6, **dadurch gekennzeichnet, dass** das Justiermittel (23) an seinem in den Grundteil (27) liegenden freien Ende (26) ein Angriffsformelement (29) für ein Einstellwerkzeug besitzt.

## Claims

1. A spoiler for a motor vehicle, comprising an actuating device and an air deflector (11) which is displaceable into an operative position and a rest position by means of the actuating device and which, in its rest position (RS), is lowerable in relation to a fixed body shell (3) and, in its operative position (WS), is actuatable so as to project beyond this body shell (3), which actuating device has at least one actuator (12, 13) with an actuating arm (21) which is displaceably mounted in a guide housing (20) and on the fixing end (18, 19) of which the air deflector (11) is arranged, and which actuator (12, 13) is provided with a manually operable adjusting device (22) in order to align the air deflector (11) with the body shell (3) in its rest position (RS), **characterised in that** the actuator (12, 13) has, at its fixing end (18, 19), an internally or externally threaded portion (24) which extends in the longitudinal direction of the actuator (12, 13) and acts as an adjusting device (22) and onto which is screwed an adjusting means (23) of the adjusting device (22), the adjusting means (23) having a counterthreaded portion (25), and **in that** the air deflector (11) is fixed to the free end (26) of the adjusting means (23).

2. A spoiler according to claim 1, **characterised in that** the adjusting means (23) is rotatable relative to the air deflector (11) and, at its free end (26), has a fixing portion (31) which engages in the air deflector (11).

3. A spoiler according to claim 1 or 2, **characterised in that** the air deflector (11) has a fixing opening (34) through which the fixing portion (32) extends, and **in that** the air deflector (11) is held on the fixing portion (32) by a securing means (33).

4. A spoiler according to claim 3, **characterised in that** the fixing opening (34) is formed as a slot.

5. A spoiler according to claim 3, **characterised in that** the fixing opening (34) has an inner diameter which is larger than the outer diameter of the fixing portion (32).

6. A spoiler according to claim 1, **characterised in that** the air deflector (11) comprises a base part (27) and a cover (28) closing the base part (27), and the base part (27) is fixed to the free end (26) of the adjusting means (23).

7. A spoiler according to claim 6, **characterised in that** the adjusting means (23) has, at its free end (26) lying inside the base part (27), a shaped engagement part (29) for an adjusting tool.

## Revendications

1. Dispositif de guidage d'air pour un véhicule automobile, comportant un dispositif d'orientation et un élément de guidage d'air (11), pouvant être déplacé au moyen du dispositif d'orientation dans une position active et une position de repos, lequel peut être encastré, dans sa position de repos RS, par rapport à une paroi extérieure (3) fixe de la carrosserie, et, en position active WF, peut être orienté de manière à dépasser de cette paroi extérieure (3) de la carrosserie, lequel dispositif d'orientation possède au moins un organe d'orientation (12, 13) avec un bras d'orientation (21) monté coulissant dans un boîtier de guidage (20), bras à l'extrémité de fixation (18, 19) duquel est disposé l'élément de guidage d'air (11), et lequel organe d'orientation (12, 13) est équipé d'un dispositif de réglage (22) pouvant être actionné manuellement afin d'orienter l'élément de guidage d'air (11) dans sa position de repos RS par rapport à la paroi extérieure (3) de la carrosserie, **caractérisé en ce que** l'organe d'orientation (12, 13) possède, à son extrémité de fixation (18, 19), comme dispositif de réglage (22), une partie de taraudage ou de filetage extérieur (24) s'étendant dans la direction longitudinale de l'organe d'orientation (12, 13), partie sur laquelle est vissé un moyen d'ajustage (23), présentant une contrepartie filetée (25), du dispositif de réglage (22), et **en ce qu'**à l'extrémité libre (26) du moyen d'ajustage (23) est fixé l'élément de guidage d'air (11).

2. Dispositif de guidage d'air selon la revendication 1, **caractérisé en ce que** le moyen d'ajustage (23) peut tourner par rapport à l'élément de guidage d'air (11) et possède, à son extrémité libre (26), une partie de fixation (31) qui s'engage dans l'élément de guidage d'air (11).

3. Dispositif de guidage d'air selon la revendication 1 ou 2, **caractérisé en ce que** l'élément de guidage d'air (11) possède un ajour de fixation (34) qui est traversé par la partie de fixation (32), et **en ce que** l'élément de guidage d'air (11) est maintenu par un moyen de blocage (33) sur la partie de fixation (32).

4. Dispositif de guidage d'air selon la revendication 3, **caractérisé en ce que** l'ajour de fixation (34) est réalisé en tant que trou oblong.

5. Dispositif de guidage d'air selon la revendication 3, **caractérisé en ce que** l'ajour de fixation (34) présente un diamètre intérieur qui est supérieur au diamètre extérieur de la partie de fixation (32).

6. Dispositif de guidage d'air selon la revendication 1, **caractérisé en ce que** l'élément de guidage d'air (11) est constitué d'une pièce de base (27) et d'un couvercle (28) fermant la pièce de base (27), et la pièce de base (27) est fixée à l'extrémité libre (26) du moyen d'ajustage (23).

7. Dispositif de guidage d'air selon la revendication 6, **caractérisé en ce que** le moyen d'ajustage (23) possède, à son extrémité libre (26), située dans la pièce de base (27), un élément profilé de prise (29) pour un outil de réglage.
